# EUROPEAN PATENT APPLICATION

(11) **EP 4 431 901 A1**
(43) Date of publication of application: **18.09.2024**
(21) Application number: 22889062.0
(22) Date of filing: 10.10.2022
(51) Int. Cl.: G01M 17/08

(54) **TRAIN PIPE PRESSURE RELIEF TEST DEVICE**

(30) Priority: 08.11.2021 CN 202111313088
(71) Applicant: CRRC Datong Co., Ltd., Pingcheng District Datong Shaanxi 037038 (CN)
(72) Inventor: TONG, Lei, Datong, Shanxi 037038 (CN)
(74) Representative: Cabinet Beau de Loménie
(86) International application number: PCT/CN2022/124452
(87) International publication number: WO 2023/078036

(57) **Abstract**

A train pipe pressure relief test device (100) for a heavy-load combined train, the device comprising a connecting pipe (101), a test pipe (103) and a cut-out cock (104), wherein pipe joints (102) are arranged at two ends of the connecting pipe (101) and are used for being in sealed connection with a train; the test pipe (103) is in sealed communication with the connecting pipe (101); and the cut-out cock (104) is arranged on the test pipe (103). The train pipe pressure relief test device has the beneficial effects that the wind pressure fluctuation condition of a train pipe can be truly simulated under the condition that the train pipe (303) for a heavy-load train is damaged and fractured to cause pressure relief, so that test data is more accurate and closer to the real working condition, and moreover, the device has a simple structure, can be mounted and dismounted at any time, and facilitates use and maintenance.

## Description

### CROSS REFERENCE TO RELATED APPLICATION

This disclosure claims priority to Chinese Patent Application No. 202111313088.9, filed on November 8, 2021, and entitled "TRAIN PIPE PRESSURE RELIEF TEST DEVICE", the entire contents of which are hereby incorporated by reference in its entirety.

### TECHNICAL FIELD

The present disclosure relates to a pressure relief test device, in particular to a pressure relief test device for a train pipe, and further relates to a pressure relief test device for a train pipe of a heavy-haul combined train.

### BACKGROUND

A heavy-haul combined train is a main transportation tool for railway freight, and its braking instructions are mainly transmitted through a train pipe filled with compressed air. A rate of pressure decrease of the train pipe directly affects a braking effect of the train. Therefore, a test device is required to simulate the generation of the braking instructions after the compressed air is released due to leakage or even a broken coupler in the train pipe of the heavy-haul combined train.

At present, due to the high air pressure of the train pipe, it is impossible to manually disconnect the train pipe to achieve pressure relief, and thus it is impossible to accurately simulate and monitor the changes in air pressure in the entire train pipe when the air pressure leakage occurs due to damage or breakage in the train pipe of any intermediate vehicle. The test devices in the related art cannot accurately simulate the damage or breakage of the train pipe, nor avoid making any changes to the locomotives and vehicles. They cannot achieve detachment and attachment of the test devices at any time. The structures of the test devices are complex, and are inconvenient to use and maintain. In order to more accurately simulate the pressure relief situation in the train pipe of any intermediate vehicle and make the test data more accurate and closer to the actual working conditions, it is necessary to provide a pressure relief test device for the train pipe of the heavy-haul combined train with a simple structure, which can be detached and attached at any time, and is convenient for use and maintenance.

### SUMMARY

According to one aspect of this disclosure, a pressure relief test device is provided for a train pipe, which is applied to a train and includes: a connecting pipe, a test pipe, and a cut-out cock. Pipe joints are provided at two ends of the connecting pipe for sealing connection to the train. The test pipe is sealingly connected to the connecting pipe. The cut-out cock is provided on the test pipe.

According to one of embodiments of this disclosure, the connecting pipe includes a first connecting pipe and a second connecting pipe, wherein a three-way pipe connector is sealingly provided between the first connecting pipe and the second connecting pipe, with a third port of the three-way pipe connector being sealingly connected to the test pipe.

According to one of embodiments of this disclosure, the first connecting pipe and the second connecting pipe include a plurality of pipe segments, wherein a pipe joint is provided between every two pipe segments.

According to one of embodiments of this disclosure, the pipe joint is made of a material resistant to low temperature, corrosion and rust.

According to one of embodiments of this disclosure, the connecting pipe is made of a material resistant to low temperature, corrosion and rust.

According to one of embodiments of this disclosure, the connecting pipe is a hose.

According to one of embodiments of this disclosure, the connecting pipe is a rubber hose or a metal hose.

According to one of embodiments of this disclosure, the test pipe is a rigid pipe.

According to one of embodiments of this disclosure, the test pipe is a seamless stainless steel pipe or a carbon steel pipe.

According to one of embodiments of this disclosure, the test pipe is a rubber hose or a metal hose.

From the above technical solution, the advantages and positive effects of the pressure relief test device for the train pipe proposed in this disclosure are as follows.

The pressure relief test device for the train pipe proposed in this disclosure includes a connecting pipe, a test pipe and a cut-out cock, wherein the connecting pipe is provided with pipe joints at two ends for sealing connection to a train, the test pipe is sealingly connected to the connecting pipe; and the cut-out cock is provided on the test pipe. Through this design, the pressure relief test device for the train pipe proposed can accurately simulate the pressure relief situation of compressed air in the train pipe after the train pipe of any intermediate vehicle of a heavy-haul combined train is damaged or broken, making the test data more accurate. Moreover, the device has a simple structure and can be directly connected without making any modifications to the locomotives and vehicles. It can be detached and attached at any time and is convenient for use and maintenance.

The above and other purposes, features, and advantages of this disclosure will be more apparent through the following description of preferred embodiments with reference to the accompanying drawings.

### BRIEF DESCRIPTION OF THE DRAWINGS

The foregoing and other features and advantages of this disclosure will become more apparent by describing in detail exemplary embodiments thereof with reference to the accompanying drawings.
FIG. 1 is a schematic diagram of a structure of a pressure relief test device for a train pipe of this disclosure.
FIG. 2 is a schematic diagram of a structure of a pressure relief test device for a train pipe of this disclosure according to another embodiment.
FIG. 3 is a schematic diagram of an installation position of a pressure relief test device for a train pipe of this disclosure.

The reference signs are described below.

100, pressure relief test device for train pipe. 101, connecting pipe. 102, pipe joint. 103, test pipe. 104, cut-out cock. 105, three-way pipe connector. 1011, first connecting pipe. 1012, second connecting pipe. 1031, first test pipe. 1032, second test pipe. 301, locomotive. 302, vehicle. 303, train pipe.

### DETAILED DESCRIPTION

Exemplary embodiments will be described herein more fully with reference to the accompanying drawings. However, the exemplary embodiments can be implemented in various forms and should not be construed as being limited to the embodiments set forth herein. Although relative terms such as "upper" and "lower" are used in this specification to describe the relative relationship of one component of the icon to another, these terms are used in this specification solely for convenience, for example, based on the orientation of the example illustrated in the drawings. It is to be understood that if the device of the icon is turned upside down, the component described as being "upper" will become the component that is "lower." Other relative terms, such as "top," "bottom," and the like, are also used similarly. When a structure is "on" another structure, it may refer to the structure being integrally formed on the other structure, or the structure being "directly" disposed on the other structure, or the structure being "indirectly" disposed on the other structure through another structure.

The terms "a," "an," "the," and "said" are used to indicate the existence of one or more elements/components/etc. The terms "comprise", "include" and "have" are used to indicate an open-ended inclusion and refer to the fact that there may be elements/components/etc. in addition to those listed elements/components/etc. The terms "first," "second," and the like are used merely as markers and do not limit the quantity of the objects they mark.

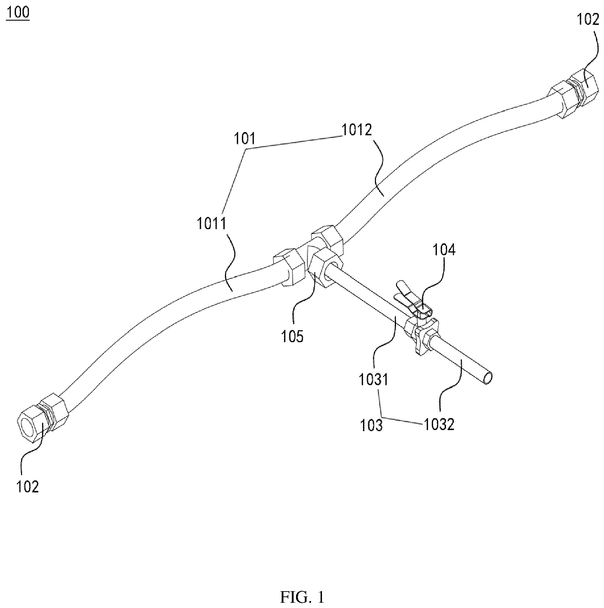

Referring to FIG. 1, a schematic diagram of a structure of a pressure relief test device 100 for a train pipe is representatively shown, specifically showing that the pressure relief test device 100 for the train pipe includes a connecting pipe 101, pipe joints 102, a test pipe 103, and a cut-out cock 104. The pipe joints 102 are provided at two ends of the connecting pipe 101 for sealing connection to a train. The test pipe 103 is sealingly connected to the connecting pipe 101. The cut-out cock 104 is provided on the test pipe 103. The connecting pipe 101 includes a first connecting pipe 1011 and a second connecting pipe 1012. A three-way pipe connector 105 is sealingly provided between the first connecting pipe 1011 and the second connecting pipe 1012, with a third port of the three-way pipe connector 105 being sealingly connected to the test pipe 103. The test pipe 103 includes a first test pipe 1031 and a second test pipe 1032. In this exemplary embodiment, the pressure relief test device for the train pipe proposed in this disclosure is illustrated using the application to a heavy-haul combined train as an example. It is readily understood by those skilled in the art that a variety of modifications, additions, substitutions, deletions, or other changes to the specific embodiments described below for the purpose of applying the relevant design of this disclosure to other types of trains, would still fall within the scope of the principles of the disclosed pressure relief test device 100 for the train pipe.

In this embodiment, the pipe joint 102 is made of a material that is resistant to low temperature, corrosion, and rust. The pipe joint 102 can be made of materials such as carbon steel, stainless steel, or copper alloy. Preferably, a ferrule-type pipe joint under the GB/T3765 specification is adopted. The type of the pipe joint 102 can be selected according to the requirements of connection and installation, with no specific limitations.

The connecting pipe 101 is made of a material that is resistant to low temperature, corrosion, and rust. The connecting pipe is usually a hose, preferably a rubber hose that meets the performance requirements of the TB/T60 specification. Alternatively, a qualified metal hose can also be used.

In this embodiment, the three-way pipe connector 105 is a straight three-way connector. In other embodiments, a lateral three-way connector can also be used. The three-way pipe connector 105 can be of equal or unequal diameters, as long as it meets the airtightness and reliability requirements for pipeline connections. There are no specific limitations.

In this embodiment, the test pipe 103 is a rigid pipe, which may be a steel pipe, preferably a seamless stainless steel pipe or a carbon steel pipe conforming to the GB/T14976 specification. In some other embodiments, the test pipe 103 may also be a hose that can ensure the safety of the test, such as a rubber hose or a metal hose.

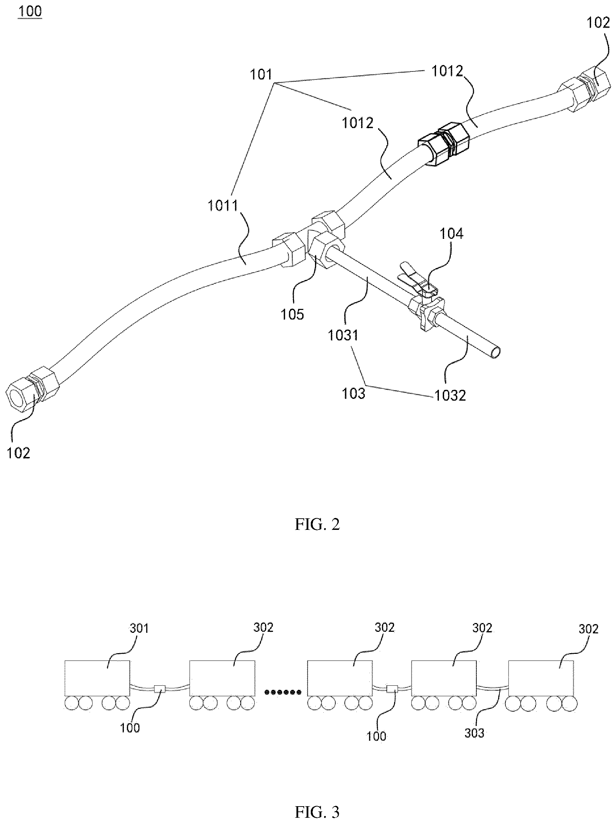

As shown in FIG. 2, in this embodiment, the first connecting pipe 1011 and the second connecting pipe 1012 in the pressure relief test device 100 for the train pipe proposed in this disclosure include a plurality of pipe segments, with a pipe joint 102 being provided between every two pipe segments. The remaining components are the same as those of the embodiment shown in FIG. 1. In some other embodiments, there may be a plurality of connecting pipe, and accordingly, there may also be a plurality of pipe joints 102. The number of connecting pipes depends on the length of each connecting pipe and the distance between the two train vehicles to be connected.

The pressure relief test device for the train pipe provided in this disclosure is suitable for air pipelines with ambient temperature ranging from -50° to 70°, nominal pressure not exceeding 1000KPa, and inner diameter of pipeline greater than 25mm.

FIG. 3 illustrates an installation position of the pressure relief test device 100 for the train pipe of this disclosure, in which a heavy-haul combined train consists of a locomotive 301 and vehicles 302. Under normal conditions, the locomotive 301 and the vehicle 302 are connected to each other through a train pipe 303, and the vehicle 302 and the vehicle 302 are connected to each other through the train pipe 303. When it is desired to simulate a pressure relief test of a train pipe in case of a broken coupler in any intermediate vehicle of the heavy-haul combined train, the pressure relief test device 100 for the train pipe may be connected to the middle of the train pipe 303 between the locomotive 301 and the vehicle 302, or alternatively, the pressure relief test device 100 for the train pipe may be connected to the middle of the train pipe 303 between two adjacent vehicles 302. The figure shows connections of two pressure relief test devices 300 for the train pipe, but more devices can be connected at desired positions, and this disclosure is not limited in this regard.

It is to be noted herein that the pressure relief test device 100 for the train pipe illustrated in the accompanying drawings and described in this specification are only a few examples of the many types of pressure relief test devices for train pipes that are capable of employing the principles of this disclosure. It is to be clearly understood that the principles of this disclosure are not limited to any of the details of the pressure relief test device for the train pipe or any of the components of the pressure relief test device for the train pipe illustrated in the accompanying drawings or described in this specification.

The above is a detailed description of several exemplary embodiments of the pressure relief test device for the train pipe proposed in this disclosure, and the following is an exemplary description of the process of using the pressure relief test device for the train pipe proposed in this disclosure.

Combined with FIGS. 1 to 3 of the accompanying drawings, the process of using the pressure relief test device for the train pipe proposed in this disclosure is as follows: with the cut-out cock 104 fully closed, the pressure relief test device 100 for the train pipe is installed between the locomotive 301 and the vehicle 302, or is installed between two adjacent vehicles 302, wherein the connecting pipe 101 of the pressure relief test device for the train pipe is connected to the train pipe 303 through the pipe joint 102 to achieve the installation of the pressure relief test device for the train pipe. At this time, the air pressure in the connecting pipe 101, the three-way pipe connector 105, and the first test pipe 1031 is the same as the air pressure in the train pipe 303, both of which are usually 600 kPa or 500 kPa, and the second test pipe 1032 is connected to the external air. When the test begins, opening the cut-out cock 104 causes the pressure in the train pipe 303 to drop. This can effectively simulate the pressure relief process in case of damage in the train pipe or broken coupler of any intermediate vehicle in a heavy-haul combined train.

The rate of pressure drop in the train pipe can be controlled by adjusting the opening degree of the cut-out cock, and it can simulate the braking type used under different drop rates, e.g.,
when the pressure in the train pipe drops at a rate of less than 40kPa/min, no braking occurs and the train operates normally;
when the pressure in the train pipe drops at a rate ranging from 10kPa/s to 40kPa/s, ordinary braking occurs before the pressure in the train pipe decreases to 40kPa;
when the pressure in the train pipe drops at a rate greater than 80 kPa/s, emergency braking occurs.

Through the above-mentioned usage process of the pressure relief test device for the train pipe in this disclosure in the train pipe pressure relief test, it can be concluded that the pressure relief test device for the train pipe disclosed can accurately simulate the pressure relief situation of compressed air in the train pipe after the train pipe of any intermediate vehicle of a heavy-haul combined train is damaged or broken, making the test data more accurate. Moreover, the device has a simple structure and can be directly connected without making any modifications to the locomotives and vehicles. It can be detached and attached at any time, is convenient for use and maintenance, and can be reused, effectively reducing costs.

In summary, the pressure relief test device for the train pipe proposed in this disclosure includes a connecting pipe, a test pipe and a cut-out cock, wherein the connecting pipe is provided with pipe joints at two ends for sealing connection to a train, the test pipe is sealingly connected to the connecting pipe; and the cut-out cock is provided on the test pipe. The pressure relief test device for the train pipe of this disclosure can accurately simulate the pressure relief situation in case of damage or breakage of the train pipe in any intermediate vehicle of a heavy-haul combined train. Moreover, the device has a simple structure and can be directly connected without making any modifications to the locomotives and vehicles. It can be detached and attached at any time, is convenient for use and maintenance, and can be reused, effectively reducing costs. The pressure relief test device for the train pipe of this disclosure can make the test data closer to the real situation, to provide better safety for the actual operation.

It is to be understood that this disclosure is not limited to the detailed structure and arrangement of the components proposed in this specification. This disclosure can have other embodiments and can be implemented and executed in various ways. The aforementioned variations and modifications fall within the scope of this disclosure. It is to be understood that this disclosure disclosed and defined in this specification extends to all alternative combinations of two or more individual features mentioned or apparent in the text and/or drawings. All these different combinations constitute multiple alternative aspects of this disclosure. The embodiments described in this specification illustrate the best ways known to achieve this disclosure and will enable those skilled in the art to utilize this disclosure.

## Claims

1. A pressure relief test device for a train pipe, applied to a train, comprising:
a connecting pipe provided with pipe joints at two ends of the connecting pipe for sealing connection to the train;
a test pipe sealingly connected to the connecting pipe; and
a cut-out cock provided on the test pipe.

2. The pressure relief test device of claim 1, wherein the connecting pipe comprises a first connecting pipe and a second connecting pipe, and wherein a three-way pipe connector is sealingly provided between the first connecting pipe and the second connecting pipe, with a third port of the three-way pipe connector being sealingly connected to the test pipe.

3. The pressure relief test device of claim 2, wherein the first connecting pipe and the second connecting pipe comprise a plurality of pipe segments, and wherein a pipe joint is provided between every two pipe segments.

4. The pressure relief test device of claim 1, wherein the pipe joint is made of a material resistant to low temperature, corrosion and rust.

5. The pressure relief test device of claim 1, wherein the connecting pipe is made of a material resistant to low temperature, corrosion and rust.

6. The pressure relief test device of claim 5, wherein the connecting pipe is a hose.

7. The pressure relief test device of claim 6, wherein the connecting pipe is a rubber hose or a metal hose.

8. The pressure relief test device of claim 1, wherein the test pipe is a rigid pipe.

9. The pressure relief test device of claim 8, wherein the test pipe is a seamless stainless steel pipe or a carbon steel pipe.

10. The pressure relief test device of claim 1, wherein the test pipe is a rubber hose or a metal hose.
